# EUROPEAN PATENT APPLICATION

(11) **EP 1 215 515 A2**
(43) Date of publication of application: **19.06.2002**
(21) Application number: 01126646.7
(22) Date of filing: 08.11.2001
(51) Int. Cl.: G02B 6/25

(54) **Optical fiber cutting devices and methods for use in the manufacture of fiber optic cable components**

(30) Priority: 18.12.2000 US 740342
(71) Applicant: CCS Technology, Inc., Wilmington, DE 19803 (US)
(72) Inventor: Dean, Edward T., Rural Hall, NC 27045 (US); Gerson, David A., Winston-Salem, NC 27107 (US); Greveling, Johannes I., Clemmons, NC 27012 (US); McGirr, John J., Jr., Clemmons, NC 27012 (US); Orosz, David G., Pinnacle, NC 27043 (US)
(74) Representative: Sturm, Christoph, Dipl.-Ing.

(57) **Abstract**

An optical component cutting device (10) for cutting at least one optical component (11) has a clamping station (40) with clamping members (42a,42b) associated with a clamp drive mechanism operative to move at least one of the clamping members into dynamic clamping contact with the at least one optical component, and a cutting station (60) having cutting members (62,64) associated with a cutting drive mechanism operative to move at least one cutting member into dynamic cutting relationship with the at least one optical component as the optical component is translating along the line. An exemplary method of cutting the least one optical component including the steps of: a) guiding the optical component so that it is generally aligned with a cutting station; b) accelerating rotating clamping members to a speed generally complementary to that of the optical component line speed; and then c) cutting the optical component at the cutting station.

## Description

The present invention relates to optical component cutting devices and methods for use in the manufacture of fiber optic cables and, more particularly, to optical fiber cutting devices and methods.

Fiber optic cables typically include a plurality of optical fibers. Methods have been developed to cut the optical fibers, the typical methods involving the application of pressure to the fibers, for example, with mechanical clamps. Such procedures are typically associated with optical fiber connectorization or splicing procedures including cleaving the optical fiber and splicing or connectorization. The procedure is a static one, that is, the optical fiber is typically not translating before or after the cutting procedure.

Static fiber cutters are generally known. For example, United States Patent No. 5,188,268 discloses a device for obliquely cutting an optical fiber. More particularly, the device is intended for use in on-site conditions to obtain a section plane which makes an angle of 5° relative to the axis of an optical fiber. The device includes a clamp for holding the fiber in a static condition at a first point, and a rotary clamp for holding the fiber at a second point. The device further includes two jaws for holding the fiber at a third point after it has been twisted by means of the rotary clamp. The device is designed for cutting the fiber obliquely on the work-site, i.e., in static conditions.

Known optical fiber cutting devices further include United States Patent No. 4,322,025, which describes a hand tool for cutting optical fibers by the scribe-and-break technique. The tool has a scribing edge transversely directed with respect to, and normally spaced from, a fiber supporting surface. When moved normally with respect to the fiber supporting surface, the scribing edge defines a scribing plane. Spring members, located on opposite sides of the scribing plane, are compressed between the fiber supporting surface and a bearing surface, causing the optical fiber to be clamped between the spring members and the fiber supporting surface. This compression also forces the spring members to slide longitudinally along the fiber supporting surface away from the scribing plane, imparting an axial tensile stress to the optical fiber. The optical fiber is, in a static state, scribed by the scribing edge, resulting in propagation of a fracture over the cross section.

The foregoing devices and methods address the need for the cutting of optical fibers, but do not directly address the problems associated with cutting optical fibers in a dynamic environment, for example, a manufacturing line. An expensive and time consuming device designed for use in a manufacturing line operates by clamping, cutting, and then accumulating optical fibers. Clamping is intended to be accomplished by flat clamp members disposed in parallel with the translating optical fiber, whereby the clamps sandwich the optical fiber therebetween during cutting of the fiber thereby stopping linear progression of the fibers. Cutting is intended to be accomplished by a flat edge that is aligned transversely to the direction of travel of the optical fiber. Accumulation of the optical fibers is accomplished by a reel-like outer shape of a housing that includes the clamps and the flat transverse edge. When the fiber is cut the housing must be accelerated to line speed, which can require a specialized and expensive motor for overcoming the rotational inertia of the housing, the time expended during acceleration to line speed after the cut is made negatively affects the speed of the process. The fiber pay offs may have to be slowed as the motor drives the housing up to line speed. During this time, the rotating housing accumulates a length of optical fiber. After the cutting process is complete, the operator must unwind a significant amount of the accumulated optical fiber from the reel housing.

### Aspects of the Invention

An optical component cutting device for cutting at least one optical component has a clamping station with clamping members associated with a clamp drive mechanism operative to move at least one of the clamping members into dynamic clamping contact with the at least one optical component, and a cutting station having cutting members associated with a cutting drive mechanism operative to move at least one cutting member into dynamic cutting relationship with the at least one optical component as the optical component is translating along the line.

In another aspect, an optical component cutting device for cutting at least one optical component having a clamping station with clamping members associated with a clamp drive mechanism operative to move at least one of the clamping members into clamping engagement with the at least one optical component; a cutting station having cutting members associated with a cutting drive mechanism operative to move at least one cutting member into dynamic cutting relationship with the at least one optical component as the optical component is translating; and a deflector disposed between the clamping mechanism and the cutting members, the deflector being operative to draw the optical component away from the cutting station.
An exemplary method of cutting the least one optical component including the steps of: a) guiding the optical component so that it is generally aligned with a cutting station; b) accelerating rotating clamping members to a speed generally complementary to that of the optical component line speed; and then c) cutting the optical component at the cutting station. In yet another aspect, a method of cutting at least one optical component moving at line speed in a manufacturing process, comprising the steps of: a) guiding the optical component so that it is generally aligned with a cutting station; b) rotating clamping members at a speed generally complementary to that of the optical component line speed; and c) moving at least one of the clamping members into tangential clamping contact with the optical component; and cutting the optical component at the cutting station.

### Brief Description of the Drawings

Figure 1 is an isometric view of an optical fiber cutting device according to the present invention.

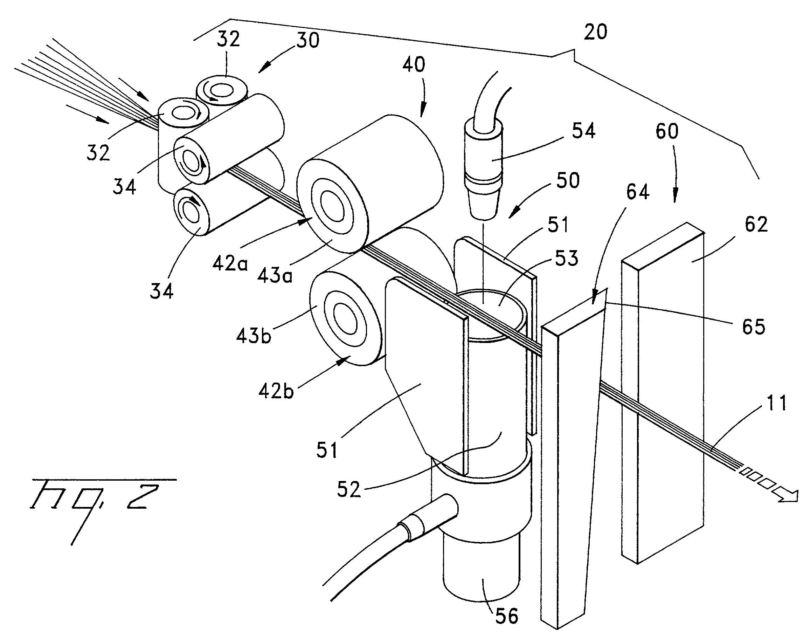

Figure 2 is an isometric view of cutting device components according to the present invention showing optical components passing on a production line prior to initiation of the cutting operation and shown without the machine frame, for purposes of explanation.

Figure 3 is a schematic view at about the time when the clamp members are driven to accelerate to line speed.

Figure 4 is a schematic view at about the time a clamp member is moved to clamp the optical components.

Figure 5 is a schematic view at about the time the cutting blades are cutting the optical components.

Figure 6 is a schematic view at about the time the cutting blade has cut the components and the vacuum system has deflected the upstream components and the clamp and guide members are being decelerated.

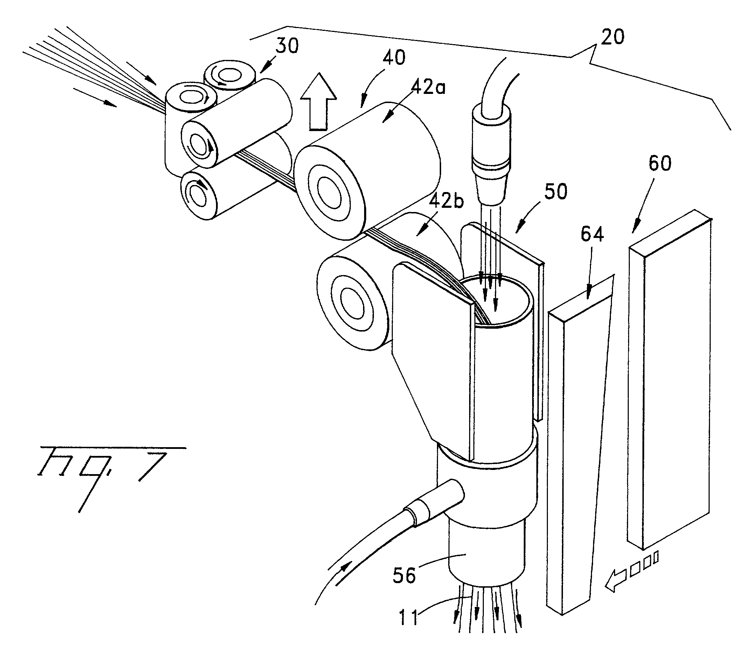

Figure 7 is a schematic view at about the time when the deflected optical components have come to a stop, and the clamp rollers and cutting members have been retracted.

### Detailed Description of the Invention

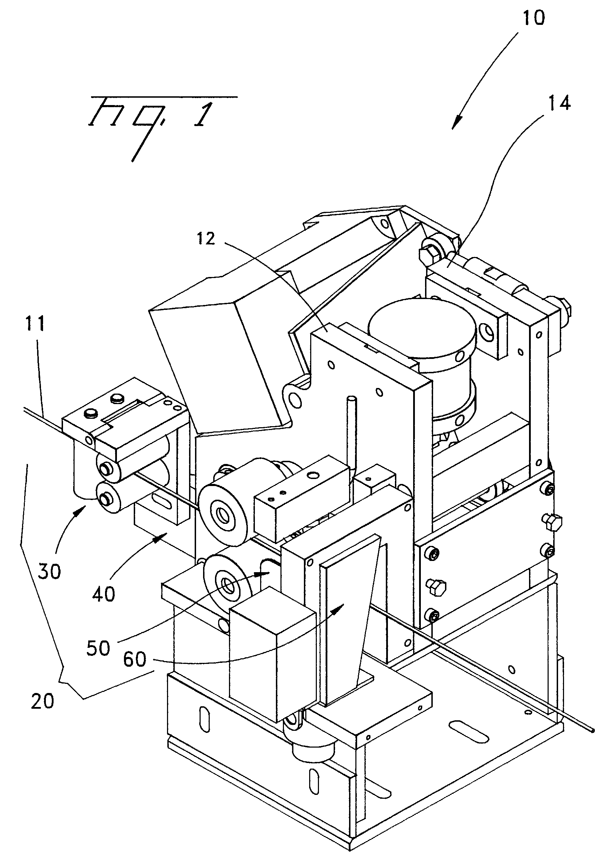

Referring to Figure 1, an exemplary optical fiber cutting device 10 for cutting one or more optical components 11 according to the present invention will be described. Optical components 11 most preferably include non-buffered silica-based optical fibers or, less preferably, other optical components, for example, optical fiber ribbons, plastic optical fibers, or tight or loose buffered optical fibers. In the preferred embodiment, cutting device 10 comprises frame sections 12 and 14. An optical component cutting system that is, in the preferred embodiment, an optical fiber cutting system 20, is generally mounted to frame sections 12 and 14. Fiber cutting system 20 preferably comprises a guide 30, a clamping station 40, a fiber deflector 50, and a cutting station 60.

Guide 30 preferably includes two sets of guide members, for example, rollers 32,34. The respective longitudinal axes of rollers 32 are generally perpendicular to the respective longitudinal axes of rollers 34 so that movement of the optical component is generally constrained on at least two but preferably four sides. Preferably, the rollers are journalled and are not rotated by a motor. During operation, rollers 32,34 rotate in a direction complementary to that of the optical components, and function as a general guide for the components as they translate toward cutting station 60. Preferably, rollers 32,34 are not linearly movable during the cutting operation.

Clamping station 40 preferably includes clamping members, for example, clamping rollers 42a and 42b. The respective longitudinal axes of clamping rollers 42a,42b are generally perpendicular to the longitudinal axes of the optical components 11. Roller 42a preferably includes an interface surface 43a having a Durometer of about 45 to 100 and more preferably about 60 to 70. In the preferred embodiment, interface surface 43a is formed of a polyurethane rubber. Roller 42b preferably includes an interface surface 43b formed of a polished metal. Clamping rollers 42a,42b are each movable about respective axes of rotation, and roller 42a is movable linearly toward or away from the optical components. Alternatively, both rollers 42a and 42b can be moved linearly. In the preferred embodiment, clamping roller 42a is operatively associated with a clamp drive mechanism (not shown) for driving the roller to rotate, and a linear translation mechanism (not shown) that is operative to move roller 42a towards or away from the optical components. The tangential speed range of clamping rollers 42a,42b preferably complements the desired line speeds of optical components 11. In consequence of activating cutting station 60, a general function of rollers 42a,42b is to accelerate to line speed, and roller 42a is moved into clamping relation with respect to optical components 11. Alternative clamping members can be used, for example, rollers shaped in a tongue-and-groove arrangement sized to receive the optical components, or caterpillar belts.

Fiber deflector 50 is preferably a pneumatic system, and comprises guide plates 51 and a suction device, for example, a pneumatic vacuum tube 52 with an inlet 53 and an outlet 56. A discharge device, for example, a nozzle 54 is operable to provide a stream of air toward optical components 11. During the cutting operation, the air flow is increased as the optical components are simultaneously being drawn into a vacuum tube 52. A general advantageous function of the fiber deflector is to deflect moving, cut optical components 11 away from cutting station 60, as the components are decelerated to a stop. Fiber deflector 50 is the preferred embodiment and generally functions as an accumulator; however, fiber cutter 50 could employ alternative accumulator devices, for example, roller or clamping accumulators. Fiber deflector 50 is preferably actuated by a programmable logic controller (PLC) that includes motion control functionalities. The PLC preferably has a high scan rate capability and fast activation speed.

Cutting station 60 preferably includes cutting members 62,64. Cutting member 62 is preferably stationary during the cutting operation. Cutting member 64 preferably includes an oblique cutting edge 65, the oblique angle opening downward toward vacuum tube 52. Cutting member 64 is operatively associated with a cutting drive mechanism (not shown) for movement to advanced and retracted positions. The cutting edges are preferably generally straight; however, arcuate, V-shaped, or crushing blades can be used. In addition, ceramic blades, thermal cutters, or electro-optical cutters can be used, e.g., a laser cutter.

The PLC is operatively associated with guide 30, clamping station 40, fiber deflector 50, and cutting station 60. The PLC is operative to read a line speed encoder (not shown) and control the guide drive mechanism for driving rollers 32 to rotate at the line speed or to decelerate at an appropriate time. The PLC controls the clamp drive mechanism for accelerating clamping rollers 42 to line speed, and it controls the linear translation mechanism for moving roller 42a into and out of clamping relation with respect to optical components 11 and roller 42b. In addition, the PLC preferably controls actuation of fiber deflector 50 and the cutting drive mechanism. The PLC is preferably operatively associated with safety features designed for optical fiber cutting device 10, for example, device 10 can be enclosed by transparent walls and a door (not shown) interlocked with the cutting system to automatically shut the device down if the door is opened.

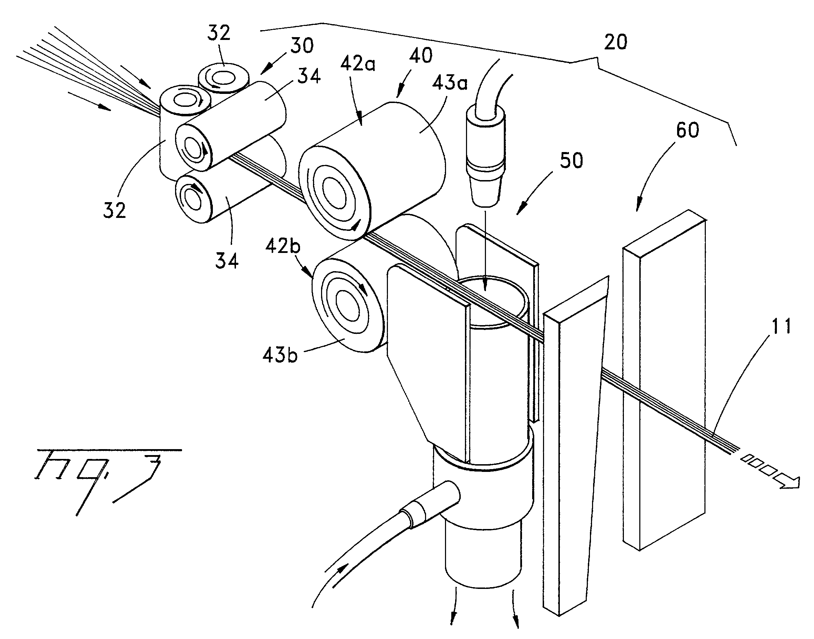

Exemplary operation of the device will now be described. In the initial state (Figure 1) with any safety devices in an operative mode, optical components 11 are running for a time to a generally steady state line speed. Rollers 32,34 contact the optical components to the extent needed to guide the optical components so that they are generally closely spaced and directed toward cutting station 60. If a fiber break or any quality issue is detected by the PLC, or preferably 30 meters before the end of the desired length of the optical components is reached, the PLC can initiate the cutting sequence by activating the clamp drive mechanism so that clamping rollers 42a,42b are accelerated to the appropriate line speed (Figure 3).

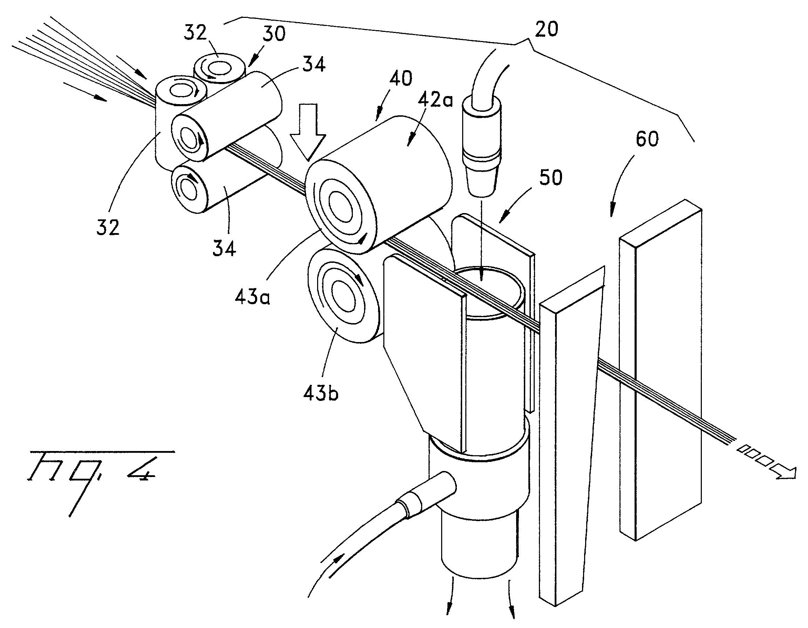

In response to encoder line speed input, the PLC drives the speed of rollers 42a,42b to become essentially the same as the line speed of the optical components at generally the point in time when the desired cut position of the optical components reaches cutting station 60. Preferably, rollers 42a,42b are fully up to speed prior to the cut and are rotating about respective axes of rotation during the cut with the optical components disposed therebetween. The PLC activates the linear translation mechanism so that interface surface 43a is moved into clamping relation with optical components 11 as the clamping rollers 42a,42b continue to rotate at line speed (Figure 4).

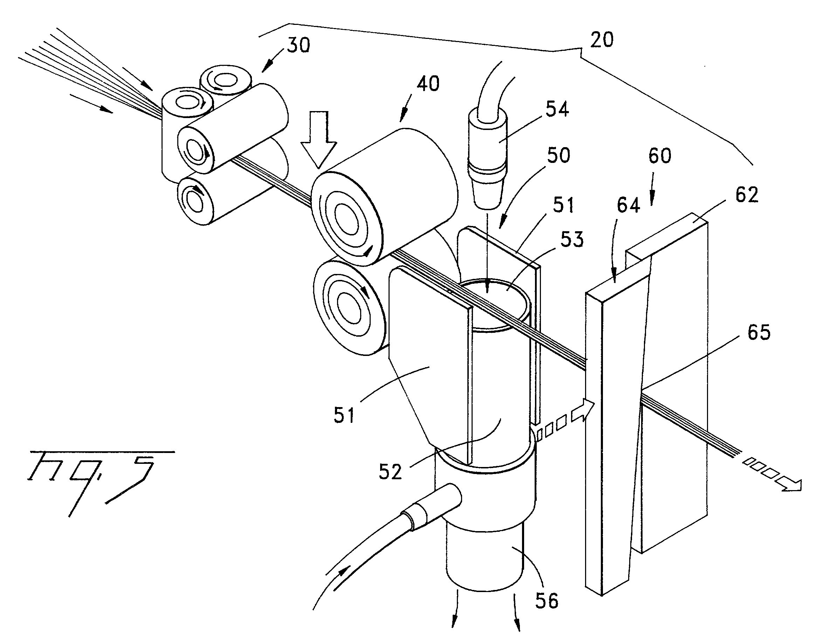

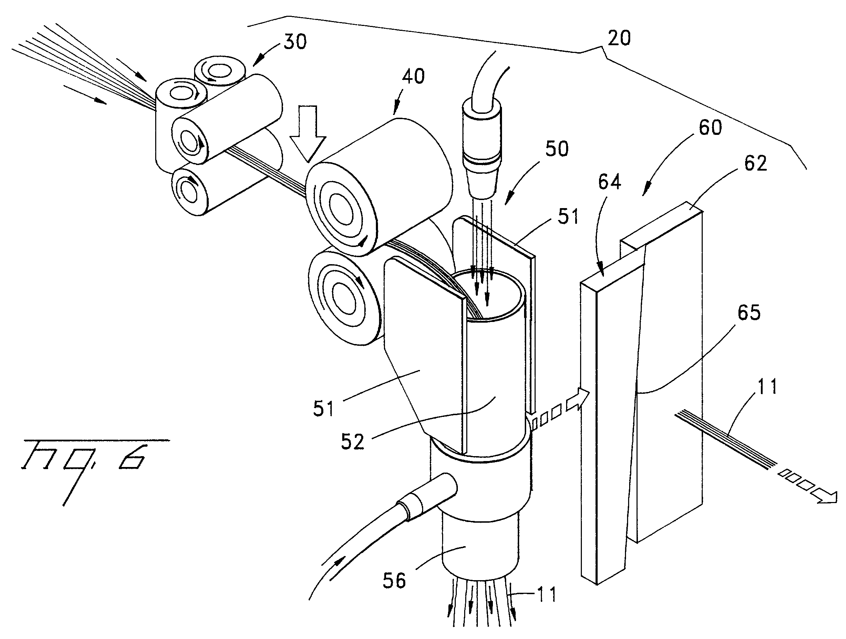

When the desired cut position is reached, the PLC will activate the cutting drive mechanism essentially simultaneously with fiber deflector 50 (Figures 5-6) and the clamping mechanism, so that the optical components 11, while still in a dynamic state, are cut by cutting members 62,64 (Figure 5). Nozzle 54 discharges air and vacuum tube 52 draws the optical components down through inlet 53 and outlet 56 (Figure 6) between plates 51, and clear of cutting edge 65. A length of optical components, for example, about 5 meters, is preferably deflected through vacuum tube 52 as a programmed ramp down profile is executed by the PLC (Figure 6). Depending on the manufacturing line characteristics, the optical components can stop in about two to six meters. In a preferred embodiment, starting from 100.0% of the line speed at the time of actuation of cutting device 20, the line speed will ramp down at a rate of about 2.5% every 10 milliseconds. When the optical components are moving at about 60.0% of ramp down, the rate is changed to about 1.0% to about 1.5%, and finally to a stop. Clamping pressure will preferably remain on optical components 11 until the safety door (not shown) is opened. The clamping roller and cutting blade are retracted, and the air vacuum is shut off.

In the preferred embodiments the clamping and cutting members are separate with the deflector therebetween, and only the clamping members rotate about respective axes, with the cutting member 64 preferably movable between advanced and retracted positions, but member 64 is preferably not rotatable. The optical component is preferably deflected away from the cutting device thereby avoiding snagging on the device.

The present invention has thus been described with reference to the foregoing embodiments, which embodiments are intended to be illustrative of the inventive concepts rather than limiting. Skilled artisans will appreciate that variations and modifications of the foregoing embodiments may be made without departing from the scope of the appended claims. Drive mechanisms can include belts, gears, motors, pulleys and other components.

## Claims

1. An optical component cutting device for cutting at least one optical component, comprising:
a clamping station having clamping members associated with a clamp drive mechanism operative to move at least one of the clamping members into dynamic clamping contact with the at least one optical component; and
a cutting station having cutting members associated with a cutting drive mechanism operative to move at least one cutting member into dynamic cutting relationship with the at least one optical component as the optical component is translating along the line.

2. The optical component cutting device of claim 1, the clamp drive mechanism being operative to rotate the clamping members and to move at least one of the clamping members toward or away from the at least one optical component.

3. The optical component cutting device of claim 1, at least one of the cutting members comprising an interface surface.

4. The optical component cutting device of claim 1, the system further comprising a deflector that is operative to dynamically deflect the at least one optical component away from the cutting members.

5. The optical component cutting device of claim 4, the deflector comprising a pneumatic device that is operative to deflect the at least one optical component clear of the cutting members.

6. The optical component cutting device of claim 1, the device further comprising guide members on at least two sides of the optical component for dynamically and precisely guiding the at least one optical component during the cutting operation.

7. The optical component cutting system of claim 6, the guide members further generally surrounding the at least one optical component.

8. The optical component cutting system of claim 1, the clamping members comprising interface surfaces formed of different materials.

9. The optical component cutting system of claim 1, the clamping members having respective axes of rotation, the optical component being positionable between the axes of rotation.
